# EUROPEAN PATENT APPLICATION

(11) **EP 1 582 503 A2**
(43) Date of publication of application: **05.10.2005**
(21) Application number: 05006927.7
(22) Date of filing: 30.03.2005
(51) Int. Cl.: C01B 3/58, C01B 3/10, H01M 8/06

(54) **Method and system for supplying hydrogen to fuel cell**

(30) Priority: 31.03.2004 JP 2004108247
(71) Applicant: Kabushiki Kaisha Riken, Tokyo (JP)
(72) Inventor: Gao, Yunzhi, 4-chome Kumagaya-shi, Saitama-ken (JP); Hayashi, Toshikatsu, 4-chome Kumagaya-shi, Saitama-ken (JP)
(74) Representative: Strehl Schübel-Hopf & Partner

(57) **Abstract**

A method for supplying hydrogen to a fuel cell comprising (a) a medium-reducing step, which comprises reforming a liquid fuel to generate a reformed gas containing hydrogen and carbon monoxide, and supplying the reformed gas to a hydrogen-purifying unit containing a carbon monoxide-oxidizing catalyst and a hydrogen-generating medium, to reduce the hydrogen-generating medium and oxidize the carbon monoxide; and (b) a medium-oxidizing step, which comprises supplying steam to a hydrogen-purifying unit containing a carbon monoxide-oxidizing catalyst and a hydrogen-generating medium, to generate hydrogen while oxidizing the hydrogen-generating medium, the medium-reducing step and the medium-oxidizing step being conducted alternately.

## Description

### FIELD OF THE INVENTION

The present invention relates to a system for supplying a hydrogen gas as fuel to fuel cells for automobiles or homes, and a method for supplying a hydrogen gas.

### BACKGROUND OF THE INVENTION

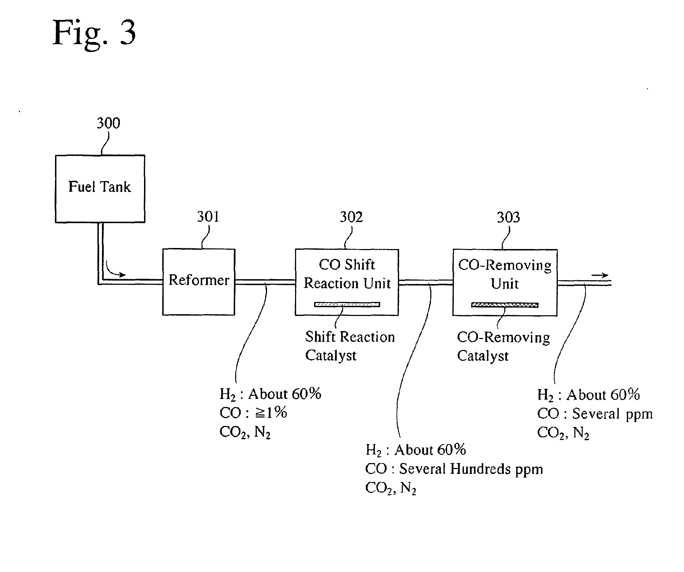

Known as systems for supplying hydrogen to fuel cells using a hydrocarbon fuel are those comprising reformers, CO shift reaction units, and CO-removing units. Fig. 3 schematically shows a conventional hydrogen-supplying system. A reformer 301 is connected to a fuel tank 300 and a CO shift reaction unit 302, and the CO shift reaction unit 302 is connected to a CO-removing unit 303. A fuel such as methane, etc. is supplied from the fuel tank 300, and reformed in the reformer 301 to a hydrogen gas containing CO, CO₂, N₂, etc. Because the concentration of CO is 1% or more in a reformed gas obtained in the reformer 301, the reformed gas cannot be supplied directly to a fuel cell. Accordingly, the reformed gas is caused to pass through the CO shift reaction unit 302 and the CO-removing unit 303 to reduce the concentration of CO to several ppm, and then supplied to the fuel cell. However, to reduce the concentration of CO in this system, it needs to use a CO shift reaction unit 302 and CO-removing unit 303, which have a large amount of capacity, making the system unpractical as a vehicle-carried system.

JP 2003-54908 A discloses a method for producing and storing hydrogen using a catalyst bed comprising a methane-steam-reforming catalyst and a non-stoichiometric metal oxide (represented by MOₓ and MOₓ₋₁), which comprises the steps of supplying a gas containing methane and steam to the catalyst bed to produce hydrogen by a steam-reforming reaction and reduce the non-stoichiometric metal oxide by a reaction represented by MOₓ + H₂ → MOₓ₋₁ + H₂O, and supplying a steam-containing gas to the reduced non-stoichiometric metal oxide to produce hydrogen and oxidize the non-stoichiometric metal oxide by a reaction represented by MOₓ₋₁ + H₂O → MOₓ+H₂. This method uses a combination of a reaction of producing hydrogen by a methane-steam-reforming catalyst and a reversible reaction of a non-stoichiometric metal oxide capable of producing hydrogen.

However, because methane is brought into direct contact with the catalyst bed in the hydrogen-producing and storing method of JP 2003-54908 A, carbon is deposited on the non-stoichiometric metal oxide. Accordingly, the non-stoichiometric metal oxide is deteriorated in a short period of time, resulting in decreased hydrogen-producing capability. In addition, because the reforming reaction of methane usually needs as high temperatures as about 450 to 600°C, sintering occurs when iron oxide, usual as a non-stoichiometric metal oxide, is used, resulting in decreased hydrogen-producing capability. Among the non-stoichiometric metal oxides, those having excellent heat resistance are resistant to deterioration at high temperatures, but they are considerably more expensive than usual non-stoichiometric metal oxides.

WO 01/096233 discloses a method for decomposing hydrocarbons comprising (a) a hydrogen-producing step of introducing hydrocarbons into a reaction chamber containing a catalyst carrying nickel, cobalt or iron and heating the reaction chamber, to decompose the above hydrocarbons to produce hydrogen, and (b) a reducing step of introducing a hydrogencontaining gas generated in the above hydrogen-producing step into a cassette containing metal oxide and heating it therein, to reduce the above metal oxide to a lower-valency oxide or an element metal, a gas discharged from the above reducing step being returned to the above hydrogen-producing step in a closed state to repeat the above hydrogen-producing step and the above reducing step.

In this method, hydrocarbons such as methane, etc. are decomposed to hydrogen and carbon by a hydrocarbon-decomposing catalyst, and the by-produced carbon is collected by absorption onto the catalyst. However, the absorption of carbon deteriorates the hydrocarbon-decomposing catalyst. To keep the hydrocarbon-decomposing capability efficiently, it is necessary to (a) supply a new hydrocarbon-decomposing catalyst, or (b) separate carbon adsorbed onto the catalyst therefrom to regenerate the catalyst, making the system costlier.

Further, because both methods described in JP 2003-54908 A and WO 01/096233 use a gas fuel such as methane, etc., they are not practical for vehicle-carried systems required to be as small as possible.

### OBJECT OF THE INVENTION

Accordingly, an object of the present invention is to provide a hydrogen-supplying system for a fuel cell, which is excellent in durability and operable at low temperatures and low cost, and a hydrogen-supplying method.

### DISCLOSURE OF THE INVENTION

As a result of intensive research in view of the above object, the inventors have found that (a) a system comprising a liquid fuel reformer and pluralities of hydrogen-purifying units can supply hydrogen while regenerating a hydrogen-generating medium, and that (b) because this system can be operated at low temperatures with little likelihood of deteriorating the hydrogen-generating medium, hydrogen can be supplied at a low cost. The present invention has been completed based on such findings.

Thus, the system of the present invention for supplying hydrogen to a fuel cell comprises a liquid fuel reformer, and pluralities of hydrogen-purifying units connected to the reformer, the reformer being connected to a fuel tank, and each hydrogen-purifying unit containing a hydrogen-generating medium and a carbon monoxide-oxidizing catalyst.

The method of the present invention for supplying hydrogen to a fuel cell comprises (a) a medium-reducing step, which comprises reforming a liquid fuel to generate a reformed gas containing hydrogen and carbon monoxide, and supplying the reformed gas to a hydrogen-purifying unit containing a carbon monoxide-oxidizing catalyst and a hydrogen-generating medium, to reduce the hydrogen-generating medium and oxidize the carbon monoxide; and (b) a medium-oxidizing step, which comprises supplying steam to a hydrogen-purifying unit containing a carbon monoxide-oxidizing catalyst and a hydrogen-generating medium, to generate hydrogen while oxidizing the hydrogen-generating medium, the medium-reducing step and the medium-oxidizing step being conducted alternately.

The degree of reduction of the hydrogen-generating medium in the medium-reducing step and the medium-oxidizing step is preferably 20 to 80% by mol.

### BRIEF DESCRIPTION OF THE DRAWINGS

Fig. 1 is a schematic view showing one example of the system of the present invention for supplying hydrogen to a fuel cell;
Fig. 2 is a flowchart showing one example of the method of the present invention for supplying hydrogen to a fuel cell; and
Fig. 3 is a schematic view showing one example of the conventional system for supplying hydrogen to a fuel cell.

### BEST MODE FOR CARRYING OUT THE INVENTION

The hydrogen-supplying system of the present invention carries out (a) a reaction of reforming a liquid fuel by a fuel-reforming catalyst, (b) a reaction of reducing a hydrogen-generating medium by a reformed gas obtained by the reforming reaction, (c) a reaction of oxidizing carbon monoxide in the reformed gas by a CO-oxidizing catalyst, and (d) a reaction of generating hydrogen by the hydrogen-generating medium (oxidation reaction of the hydrogen-generating medium).

A liquid-fuel-reforming reaction proceeds by a fuel-reforming catalyst. The liquid fuel reacts with water in the fuel-reforming reaction, to generate a reformed gas containing about 60% of hydrogen and about 5% of CO. The term "reformed gas" used herein means a mixed gas obtained by the fuel-reforming reaction.

When the reformed gas is brought into contact with the hydrogen-generating medium in an oxidized state and the CO-oxidizing catalyst, the reduction reaction of the hydrogen-generating medium represented by the following formula (1):

MₓO_{y} + nH₂ → xMO_{y-n} + nH₂O (1)

wherein M represents a metal element, and x, y and n represent integers of 1 to 10, which may be the same or different, and the oxidation reaction of carbon-monoxide represented by the following formula (2): 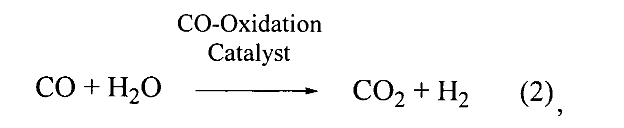 occurs. This consumes carbon monoxide generated in the fuel-reforming reaction.

When the reaction represented by the above formula (1) proceeds, the hydrogen-generating medium comes into a reduced state. The hydrogen-generating medium in a reduced state comes into an oxidized state by reaction with water as shown by the following formula (3):

xMO_{y-n} + nH₂O → MₓO_{y} + nH₂ (3)

wherein M represents a metal element, and x, y and n represent integers of 1 to 10, which may be the same or different. Hydrogen is obtained by this oxidation reaction of the hydrogen-generating medium. This is reverse reaction of the reaction represented by the above formula (1).

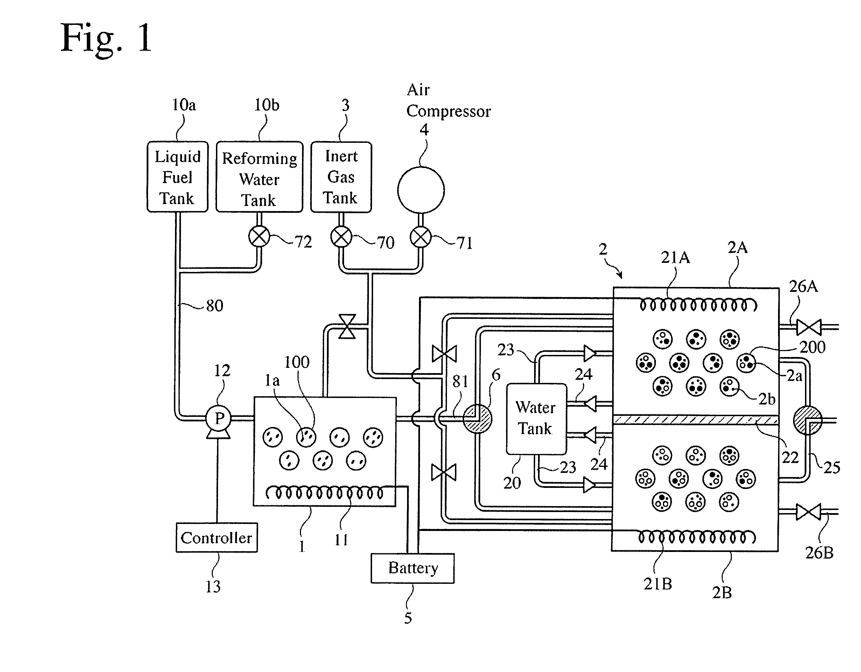

Fig. 1 shows one example of the system for supplying hydrogen to a fuel cell. The hydrogen-supplying system shown in Fig. 1 comprises a reformer 1 connected to a fuel tank 10a and a reforming water tank 10b, first and second hydrogen-purifying units 2A, 2B connected to the reformer 1, a water tank 20 connected to each hydrogen-purifying unit 2A, 2B, and an inert gas tank 3 and an air compressor 4 connected to the reformer 1 and each hydrogen-purifying unit 2A, 2B. Heaters 11, 21A, 2B are provided in the reformer 1 and the first and second hydrogen-purifying units 2A, 2B. Each heater 11, 21A, 21B is connected to a battery 5 to heat the reformer 1 and the first and second hydrogen-purifying units 2A, 2B to the desired temperatures.

The reformer 1 contains a fuel-reforming catalyst 1a for accelerating a liquid-fuel-reforming reaction. The fuel-reforming catalyst 1a is preferably supported by a carrier 100. The fuel-reforming catalyst 1a may be known, and its specific examples include Ni, Cu and Co. For instance, Ni, Cu and Co may be used alone or combined as Ni and Cu, Cu and Co, Ni and Co, or Ni, Cu and Co. Coagulation-preventing elements such as Mo, Zn, Al, etc. may be added. The carrier 100 is not restrictive, but may be known. Specifically, porous alumina, porous silica and porous magnesia may be used.

The fuel tank 10a contains a liquid fuel such as methanol, etc. The fuel tank 10a is connected to the reformer 1 through a pipe 80, and water is also supplied through the pipe 80 from the reforming water tank 10b. A pump 12 connected to a controller 13 is mounted to the pipe 80, so that the amounts of the liquid fuel and water supplied to the reformer 1 can be controlled.

There is a planar heating medium 22 between the first hydrogen-purifying unit 2A and the second hydrogen-purifying unit 2B. The heating medium 22 is tightly fixed to the hydrogen-purifying unit 2 by welding, etc., such that the first and second hydrogen-purifying units 2A, 2B exist on both sides of the heating medium 22. The first and second hydrogen-purifying units 2A, 2B are substantially the same in size. Because the heating medium 22 has excellent heat conductivity, heat generated in one hydrogen-purifying unit is efficiently conducted to another. The heating medium 22 is preferably made of stainless steel, etc.

Each hydrogen-purifying unit 2A, 2B contains a hydrogen-generating medium 2a and a CO-oxidizing catalyst 2b. The hydrogen-generating medium may be iron, zinc, selenium, zirconium and these oxides. Iron and its oxide are preferable as a hydrogen-generating medium because of low cost. Because the system of the present invention is operable at low temperatures, iron and its oxide are highly effective. The CO-oxidizing catalyst is preferably at least one selected from the group consisting of Pt, Ru, Rh, Ni and Cu, or an alloy containing at least one of them. Though the hydrogen-generating medium 2a and the CO-oxidizing catalyst 2b are supported by the same carrier 200 in the embodiment shown in Fig. 1, they may be supported by separate carriers. The carrier 200 for the hydrogen-generating medium 2a and/or the CO-oxidizing catalyst 2b may be the same such as the carrier 100 for the above fuel-reforming catalyst 1a. The amount of the CO-oxidizing catalyst 2b is preferably 0.1 to 5% by mol, more preferably 0.5 to 2% by mol, per the hydrogen-generating medium 2a. When the amount of the CO-oxidizing catalyst 2b is less than 0.1 % by mol, a CO-oxidizing reaction may not proceed sufficiently. Even though the amount of the CO-oxidizing catalyst 2b exceeds 5% by mol, the speed of the CO-oxidizing reaction would not remarkably be increased.

An L-valve 6A is provided between the reformed-gas-supplying pipe 81, which connects the hydrogen-purifying units 2A, 2B and the reformer 1. The L-valve 6 is switched to determine which the reformed gas is supplied to, the hydrogen-purifying unit 2A or the hydrogen-purifying unit 2B.

Water in the tank 20 is supplied to either one of the first and second hydrogen-purifying units 2A, 2B by a water-supplying mechanism 23. Water supplied by the mechanism 23 is preferably in the form of steam. A heat source for producing steam is not particularly restrictive. For instance, when the hydrogen-supplying system is carried by a vehicle, an exhaust gas, etc. may be used. Water generated in the first and second hydrogen-purifying units 2A, 2B are collected in the water tank 20 by a water-collecting mechanism 24. There are a line 25 for supplying hydrogen to a fuel cell (not shown) and gas leak lines 26A, 26B downstream of the first and second hydrogen-purifying units 2A, 2B.

An inert gas tank 3 and an air compressor 4 are connected to the reformer 1 and the hydrogen-purifying unit 2 via valves 71, 72.

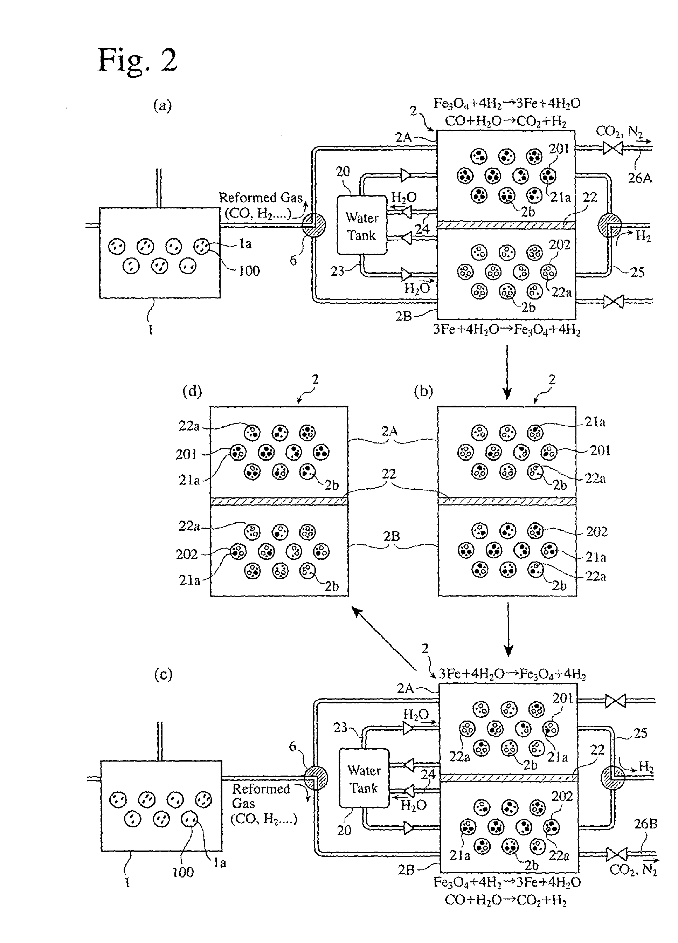

Fig. 2 schematically shows one example of the method for producing hydrogen from the liquid fuel. For the sake of simplification, heaters 11, 21A, 21B, etc. are omitted from the figure. In the embodiment shown in Fig. 2, iron and its oxide are used as a hydrogen-generating medium 21a. The first hydrogen-purifying unit 2A contains a carrier 201 supporting iron oxide 21a, and the second hydrogen-purifying unit 2B contains a carrier 202 supporting iron 22a. A CO-oxidizing catalyst 2b is also supported by each carrier 201, 202.

After the reformer 1 and the hydrogen-purifying units 2A, 2B are heated to 250 to 300°C by the heaters 11, 21A, 21B, the liquid fuel and water are supplied to the reformer 1. The supply of the liquid fuel and water is preferably controlled by the controller 13. Preferable as the liquid fuel are methanol, dimethyl ether, ethanol, acetone, LPG, etc. Among them, methanol and dimethyl ether are reformable at as low temperatures as in the redox reaction of the hydrogen-generating medium and in the reaction of oxidizing carbon monoxide, which are described later. Thus, the use of methanol and/or dimethyl ether makes it to keep the overall hydrogen-supplying system at low temperatures.

The liquid fuel and water are supplied to the reformer 1 preferably in a gasified state by heating. When the gasified liquid fuel and water are supplied, a reforming reaction proceeds efficiently in the reformer 1, producing a reformed gas containing hydrogen and CO.

The reformed gas is supplied to the first hydrogen-purifying unit 2A. Iron oxide placed in the first hydrogen-purifying unit 2A in advance is reduced by hydrogen contained in the reformed gas. Namely, a reaction represented by the following formula (4):

Fe₃O₄ + 4H₂ → 3Fe + 4H₂O (4)

proceeds to form iron 22a and water. Also, a carbon-monoxide-oxidizing reaction represented by the following formula (2): 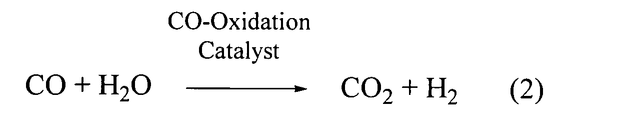 occurs by the CO-oxidizing catalyst 2b. Hydrogen generated by this reaction is also used for the reduction of iron oxide 21a.

Water generated in the first hydrogen-purifying unit 2A enters into the water tank 20 by the water-collecting mechanism 24. The recovered water is used for the oxidation reaction of iron 22a, which will be described later. An exhaust gas is discharged from the gas leak line 26A. The exhaust gas comprises carbon dioxide and nitrogen, etc., and the concentration of CO in the exhaust gas is less than 10 ppm.

Water can be supplied from the water tank 20 to the second hydrogen-purifying unit 2B by the water-supplying mechanism 23. Water from the water tank 20 is preferably heated to steam, which is sent to the second hydrogen-purifying unit 2B. Before supplying water from the water tank 20 for an oxidation reaction, an inert gas is preferably introduced into the second hydrogen-purifying unit 2B to turn the inside of the unit 2B to an inert gas atmosphere, such that high-purity hydrogen can be produced easily.

The supply of water (steam) causes the oxidation reaction of iron 22a represented by the following formula (5):

3Fe + 4H₂O → Fe₃O₄ + 4H₂ (5)

in the second hydrogen-purifying unit 2B. This reaction produces hydrogen at high purity. The purity of hydrogen is 99.9% or more, preferably 99.99% or more. Hydrogen is supplied to a fuel cell by the line 25.

When reactions represented by the above formulae (2), (4) and (5) occur, the iron oxide 21a is reduced in the first hydrogen-purifying unit 2A, while the iron 22a is oxidized in the hydrogen-purifying unit 2B. As shown in (b) in Fig. 2, when the reduction degree of the hydrogen-generating medium 2a in the first and second hydrogen-purifying units 2A, 2B reaches a certain level between 20% by mol and 80% by mol, the L-valve 6 is switched, such that the reformed gas flows from the reformer 1 to the second hydrogen-purifying unit 2B [(c) in Fig. 2]. The term "reduction degree of hydrogen-generating medium" used herein means a molar ratio of the hydrogen-generating medium in a reduced state to the total amount of the hydrogen-generating medium. Specifically, when the hydrogen-generating medium 2a is composed of iron oxide 21a and metal iron 22a, the reduction degree of the hydrogen-generating medium 2a is expressed by a molar ratio of metal iron 22a / (iron oxide 21a + metal iron 22a). When all of the hydrogen-generating medium 2a is in the form of metal iron 22a, the reduction degree is 100% by mol. When all of the hydrogen-generating medium 2a is in the form of iron oxide 21a, the reduction degree is 0% by mol.

While the oxidation reaction of the hydrogen-generating medium 2a is proceeding in the first or second hydrogen-purifying unit 2A, 2B, the reduction degree of the hydrogen-generating medium 2a can be monitored by a water-amount-detecting means (not shown) mounted in the water tank 20. While the reduction reaction of the hydrogen-generating medium 2a is proceeding, the reduction degree of the hydrogen-generating medium 2a can be monitored by a device for measuring the total amount of the reformed gas (not shown), which is mounted in the hydrogen-purifying units 2A, 2B. In this case, the reduction degree of the hydrogen-generating medium is calculated from the sum of the amount of hydrogen contained in the reformed gas (for instance, 65% of the reformed gas), and the amount of hydrogen generated by the oxidation of CO.

As shown in (b) in Fig. 2, when the reduction degree of the hydrogen-generating medium 2a is 80% by mol in the first hydrogen-purifying unit 2A, a molar ratio of iron 22a / iron oxide 21a is 8/2 in the first hydrogen-purifying unit 2A. On the other hand, when the reduction degree of the hydrogen-generating medium 2a is 20% by mol in the second hydrogen-purifying unit 2B, the molar ratio of iron 22a / iron oxide 21a is 2/8 in the second hydrogen-purifying unit 2B.

As shown in (c) in Fig. 2, the oxidation reaction of iron 22a represented by the above formula (5) proceeds by water supplied by the water-supplying mechanism 23 in the first hydrogen-purifying unit 2A. The resultant hydrogen is supplied to a fuel cell through the line 25. The reduction reaction of iron oxide 21a occurs by hydrogen in the reformed gas supplied to the second hydrogen-purifying unit 2B, resulting in the regeneration of iron 22a. Because CO in the reformed gas is reacted by the CO-oxidizing catalyst 2b as shown in the above formula (2), carbon dioxide and hydrogen are generated. Hydrogen generated by the CO-oxidizing reaction is also used for the reduction reaction of iron oxide 21a.

As shown in (d) in Fig. 2, when the reduction degree of the hydrogen-generating medium 2a reaches 20% by mol in the first hydrogen-purifying unit 2A and 80% by mol in the second hydrogen-purifying unit 2B, the L-valve 6 is switched again to permit the reformed gas to flow into the first hydrogen-purifying unit 2A, and to supply steam to the second hydrogen-purifying unit 2B. As shown in (a) in Fig. 2, this operation causes the reduction reaction of iron oxide 21a to occur in the first hydrogen-purifying unit 2A, and the oxidation reaction of iron 22a to occur in the second hydrogen-purifying unit 2B again. It is thus possible to alternately repeat (a) a step of reducing the hydrogen-generating medium 2a by the reformed gas generated in the reformer 1 (medium-reducing step), and (b) a step of oxidizing the hydrogen-generating medium 2a by supplying steam to the reduced hydrogen-generating medium 2a (medium-oxidizing step). High-purity hydrogen is generated in the medium-oxidizing step. Hydrogen can thus be generated and supplied to a fuel cell while regenerating the hydrogen-generating medium 2a.

With the reduction degree of the hydrogen-generating medium 2a between 20% by mol and 80% by mol, the medium-reducing step and the medium-oxidizing step are preferably switched. Switching at the reduction degree of 20 to 80% by mol can generate hydrogen efficiently while preventing the deterioration of the hydrogen-generating medium 2a. The prevention of the deterioration of the hydrogen-generating medium 2a improves the durability of the system. Switching from the oxidation reaction to the reduction reaction at the reduction degree of less than 20% by mol is undesirable from the aspect of hydrogen-generating efficiency. When the reduction reaction occurs at the reduction degree of more than 80% by mol, the hydrogen-generating medium 2a undesirably reduces carbon monoxide so that carbon is deposited on a surface of the hydrogen-generating medium 2a, resulting in lowering the durability of the hydrogen-generating medium 2a.

Taking a case where one of the oxidation reaction and the reduction reaction is faster than the other for example, the control of the reduction degree will be explained. First, the supply of steam is stopped when one reduction degree reaches 20% by mol. If the other reduction degree is 20 to 80% by mol, the L-valve 6 may be switched, or switching may be conducted when the other reduction degree reaches the desired level. To supply hydrogen stably, conditions such as a reaction temperature, etc. are preferably set such that the oxidation reaction becomes faster than the reduction reaction.

It is preferable to periodically introduce air from the air compressor 4 into the reformer 1 and the hydrogen-purifying units 2A, 2B during the repetition of the medium-reducing step and the medium-oxidizing step. With air introduced, carbon deposited on surfaces of the fuel-reforming catalyst 1a, the CO-oxidizing catalyst 2b and the hydrogen-generating medium 2a can be burned to recover their performance. The frequency of burning carbon is set, preferably taking the activity of the catalysts into consideration. The introduction of air may be conducted generally once every 5 to 100 medium-oxidizing steps, though its frequency may depend on the supply speed of the liquid fuel, the reaction temperature, etc.

To stop the fuel-reforming reaction and the redox reaction of the medium, the reformer 1 and the hydrogen-purifying units 2A, 2B are filled with an inert gas supplied from the inert gas tank 3. This can prevent the deterioration of the fuel-reforming catalyst 1a, the CO-oxidizing catalyst 2b and the hydrogen-generating medium 2a and improve the system's safety.

The hydrogen-supplying system shown in Figs. 1 and 2 comprises two hydrogen-purifying units. However, the system of the present invention for supplying hydrogen to a fuel cell is not restricted to have two hydrogen-purifying units, but may comprise 3 or more hydrogen-purifying units. In the case of having three hydrogen-purifying units, for instance, it is possible to conduct a medium-reducing reaction in a first hydrogen-purifying unit, a medium-oxidizing reaction (hydrogen-generating reaction) in a second hydrogen-purifying unit, and a pre-reaction of the medium oxidation reaction (for instance, an activation treatment of a fuel-reforming catalyst 1a, etc. by introducing air) in a third hydrogen-purifying unit, to generate hydrogen more efficiently.

The present invention will be explained in detail referring to Examples below without intention of restricting the present invention thereto.

### Example 1

Using the hydrogen-supplying system shown in Fig. 1 with methanol as a liquid fuel, a hydrogen-generating test was conducted as follows. Ni was carried by porous alumina pellets of 5 mm in length and 5 mm in diameter, and the resultant Ni-carrying pellets 100 were charged into the reformer 1. Fe or Fe₂O₃ and Ru were carried by separate porous alumina pellets of 5 mm in length and 5 mm in diameter. The amount of Ru was 1% by mol based on iron or its oxide. A carrier 201 supporting Fe₂O₃ and Ru was charged into the first hydrogen-purifying unit 2A, and a carrier 202 supporting Fe and Ru was charged into the second hydrogen-purifying unit 2B. The reformer land the hydrogen-purifying units 2A, 2B were made of SUS. The inert gas used was a nitrogen gas.

As shown in (a) in Fig. 2, an L-valve 6 was set such that it opened to the reformer 1 and the first hydrogen-purifying unit 2A. After heating the reformer 1 and the hydrogen-purifying units 2A, 2B to 300°C by heaters 11, 21A, 21B, methanol and water were supplied to the reformer 1, to generate a reformed gas in the reformer 1. The reformed gas was caused to flow into the first hydrogen-purifying unit 2A, in which the reduction reaction of Fe₂O₃ and the oxidation reaction of CO occurred. The reduction degree of Fe₂O₃ in the first hydrogen-purifying unit 2A was monitored by a device of measuring the amount of reformed gas, which was mounted in the first hydrogen-purifying unit 2A. When the reduction degree reached 70% by mol, the supply of methanol and water to the reformer 1 was stopped.

On the other hand, steam was supplied to the second hydrogen-purifying unit 2B by a water-supplying mechanism 23, thereby forming Fe₂O₃ and hydrogen by the oxidation reaction of Fe. The reduction degree of Fe₂O₃ was monitored by a device of measuring the amount of water. When the reduction degree reached 30% by mol, the supply of water was stopped to terminate the reduction reaction. Hydrogen generated by the oxidation reaction of Fe was supplied through a line 25. Gas chromatography measurement revealed that the resultant hydrogen had a purity of 99.99% or more.

The concentration of CO in an exhaust gas discharged from the first hydrogen-purifying unit 2A was less than 5 ppm.

When the reduction degree of the hydrogen-generating medium (iron) reached 70% by mol in the first hydrogen-purifying unit 2A and 30% by mol in the second hydrogen-purifying unit 2B, the L-valve 6 was switched. By switching, the reformed gas flows into the second hydrogen-purifying unit 2B, in which the reduction reaction of Fe₂O₃ and the oxidation reaction of CO occurred. After switching, steam was supplied to the first hydrogen-purifying unit 2A to produce hydrogen by the oxidation reaction of Fe.

The reaction of reducing Fe₂O₃ to a reduction degree of 70% by mol, and the reaction of oxidizing Fe to a reduction degree of 30% by mol were alternately conducted in the hydrogen-purifying units 2A, 2B. The 50-times measurement of the hydrogen-generating speed revealed that the speed of the hydrogen-generating reaction at the 50-th measurement was 95% of that at the first measurement. After the 50-th Fe-oxidizing reaction, the repetition of the Fe₂O₃-reducing reaction and the Fe-oxidizing reaction was stopped. Air was supplied from the air compressor 4, and each hydrogen-purifying unit 2A, 2B was heated at 500°C for 10 minutes. Nitrogen was then charged into each hydrogen-purifying unit 2A, 2B from the nitrogen gas tank 3 to fill the hydrogen-purifying units 2A, 2B with nitrogen. Thereafter, the Fe₂O₃-reducing reaction and the Fe-oxidizing reaction were conducted. As a result, the reaction speed recovered to substantially the same level as that at the first hydrogen-generating reaction.

### Comparative Example 1

Using a hydrogen-supplying system having no reformer 1, with porous alumina pellets of 5 mm in length and 5 mm in diameter carrying Ni in the hydrogen-purifying units 2A, 2B together with a hydrogen-generating medium and a CO-decomposing catalyst, which are porous alumina pellets supporting Fe or Fe₂O₃ and Ru, a hydrogen-generating test was conducted in the same manner as in Example 1 except for alternately supplying methanol and water to the hydrogen-purifying units 2A, 2B.

The hydrogen-generating speed at the third Fe-oxidizing reaction was about 1/2 of that at the first Fe-oxidizing reaction. With the reaction stopped at this point, air was supplied to the hydrogen-purifying units 2A, 2B, and they were heated at 500°C for 10 minutes. Thereafter, the Fe₂O₃-reducing reaction and the Fe-oxidizing reaction were conducted again, to measure the hydrogen-generating speed. The hydrogen-generating speed recovered to only about 60% of the first speed.

The system of the present invention for supplying hydrogen to a fuel cell comprises pluralities of hydrogen-purifying units connected to a liquid fuel reformer. Each hydrogen-purifying unit contains a carbon monoxide-oxidizing catalyst and a hydrogen-generating medium, and a reformed gas formed by the liquid-fuel-reforming reaction is supplied to the hydrogen-purifying unit, to conduct the reduction of a hydrogen-generating medium and the oxidation of carbon monoxide simultaneously. In addition, the oxidation and reduction of the hydrogen-generating medium can be alternately conducted in each hydrogen-purifying unit, to efficiently supply high-purity hydrogen to a fuel cell. Because carbon is less deposited on the carbon monoxide-oxidizing catalyst and the hydrogen-generating medium, the hydrogen-supplying system of the present invention has excellent durability. In addition, because the reforming of a liquid fuel, the supply of hydrogen by the redox reaction of a hydrogen-generating medium, and the oxidation of carbon monoxide in the reformed gas can be conducted at low temperatures, and because the liquid fuel is used as a starting material, the system of the present invention needs only small space, resulting in low cost in the installation and operation of the system.

Because a liquid fuel such as methanol, etc. is used as a starting material in the hydrogen-supplying method of the present invention, it has a high energy density. In addition, because of small space needed for the system, it is suitably carried on a vehicle. Further, because hydrogen need not be mounted on a vehicle, it is highly safe, without requiring high performance for the system and/or its parts.

## Claims

1. A system for supplying hydrogen to a fuel cell, comprising a liquid fuel reformer (1) and pluralities of hydrogen-purifying units (2A, 2B) connected to said reformer, said reformer (1) being connected to a fuel tank (10a), and each hydrogen-purifying unit (2A, 2B) containing a hydrogen-generating medium (2a) and a carbon monoxide-oxidizing catalyst (1a).

2. A method for supplying hydrogen to a fuel cell comprising
(a) a medium-reducing step, which comprises reforming a liquid fuel to generate a reformed gas containing hydrogen and carbon monoxide, and supplying said reformed gas to a hydrogen-purifying unit containing a carbon monoxide-oxidizing catalyst and a hydrogengenerating medium, to reduce said hydrogen-generating medium and oxidize said carbon monoxide; and
(b) a medium-oxidizing step, which comprises supplying steam to a hydrogen-purifying unit containing a carbon monoxide-oxidizing catalyst and a hydrogen-generating medium, to generate hydrogen while oxidizing said hydrogen-generating medium, said medium-reducing step and said medium-oxidizing step being conducted alternately.
